# EUROPEAN PATENT SPECIFICATION

(11) **EP 2 064 470 B1**
(45) Date of publication and mention of the grant of the patent: **17.08.2011**
(21) Application number: 07804250.4
(22) Date of filing: 11.09.2007
(51) Int. Cl.: F16K 15/18, F16K 15/20, A47C 7/46

(54) **A VALVE**
VENTIL
SOUPAPE

(30) Priority: 11.09.2006 GB 0617872
(43) Date of publication of application: 03.06.2009
(73) Proprietor: Seating Direct (International) Limited, Kingswood Bristol BS15 1AW (GB)
(72) Inventor: ROWE, James John, Bristol BS16 6XB (GB)
(74) Representative: Cheyne, John Robert Alexander M.
(86) International application number: PCT/GB2007/003456
(87) International publication number: WO 2008/032062

(56) References cited:
- EP-A- 1 669 006
- WO-A-97/19622
- GB-A- 2 230 589
- US-A- 3 661 422
- US-A- 3 893 927

## Description

This invention relates to a valve, and is particularly, although not exclusively, concerned with a controllable check valve for inflating and deflating a bladder.

It is known for chairs, for example office chairs, to be provided with adjustable lumbar support. Adjustment is performed by inflating or deflating an appropriately shaped bladder situated in a backrest of the chair at a position corresponding to the lumbar region of an occupant of the chair. Typically, the bladder is inflated by means of a squeezable hand pump which forces air into the bladder through a check valve. To deflate the support, a manual control such as a push button is used to open the check valve to allow air to escape from the bladder.

Another example of valve means for a lumbar support is disclosed in US 3,661,422.

It is important in such applications for the valves to be substantially leak-proof. It is also desirable for the valves to be constructed in such a manner that accidental opening of the valve can be avoided.

According to the present invention there is provided a valve comprising an operating element which is rotatable about an operating axis to operate a first valve element and is displaceable along the operating axis to operate a second valve element.

The provision of two valve elements, operated by a common operating element, enables unintentional leakage to be minimised.

The operating element may have a cam surface which engages the first valve element so that rotation of the operating element displaces the first valve element with respect to a first valve seat. The first valve element may be resiliently biased towards the cam surface or the seat, or both.

The second valve element may be displaceable with respect to a second valve seat by displacement of the operating element. The second valve element may be constituted by a portion of the operating element, and may be resiliently biased towards the second valve seat.

The operating element may be provided with a control element which is manually rotatable and displaceable relative to a body of the valve. In an embodiment in accordance with the present invention, the control element may cooperate with the body in such a way as to permit displacement of the operating element to move the second valve element to its open condition only when the operating element is in a rotational position which corresponds to the open condition of the first valve element. As a result of this construction, the control element cannot accidentally be displaced to move the second valve element towards its open condition if it has been rotated to a position in which the first valve element is in its closed condition.

To achieve this, the control element and the body may have respective abutment surfaces extending transversely of the operating axis, these abutment surfaces being disposed opposite each other in the rotational position of the operating element corresponding to the closed position of the first valve element, in order to prevent displacement of the operating element to move the second valve element to its open condition. The abutment surfaces are out of alignment with each other when the operating element is in a rotational position corresponding to the open condition of the first valve element, whereby displacement of the operating element along the operating axis is permitted.

The abutment surface on the body may be provided on a cylindrical wall surrounding the operating axis. The abutment surface on the control element may be provided on a lug which projects radially over the wall.

The valve may have an inlet and an outlet, the first valve element being movable to its open condition under a differential pressure between the inlet and the outlet in order to permit flow from the inlet to the outlet bypassing the second valve element. Displacement of the first and second valve elements to their open conditions may allow flow from the outlet to the exterior of the valve past the first and second valve elements.

In a particular embodiment in accordance with the present invention, the valve may comprise an inflation check valve. The present invention also provides an inflatable article incorporating a valve as defined above, and the inflatable article may be a lumbar support for a seat.

For a better understanding of the present invention, and to show more clearly how it may be carried into effect, reference will now be made, by way of example, to the accompanying drawings, in which:-
Figure 1 is a perspective view of an inflation valve;
Figure 2 is a sectional view of the valve; and
Figure 3 is a further sectional view of the valve, taken at a plane perpendicular to that of Figure 2.

The valve shown in the Figures is intended for use as an inflation valve for a bladder forming a lumbar support for a seat. The valve comprises a body 2 having an inlet and an outlet defined by respective inlet and outlet spigots 4, 8. The inlet spigot 4 is formed integrally with the main part of the body 2, whereas the outlet spigot 8 comprises a brass element moulded into a fitting 10 which is bonded into the body 2. The body 2 and the fitting 10 are made from a plastics material.

The body 2 defines a valve chamber 12. The interior of the inlet spigot 4 opens into the valve chamber 12. The chamber 12 is defined on two sides by walls 14 and 16 of the body 2. The chamber 12 communicates with the interior of the outlet spigot 8 through a passage 18 in the wall 14, and communicates with the exterior of the valve body through a passage 20 in the wall 16.

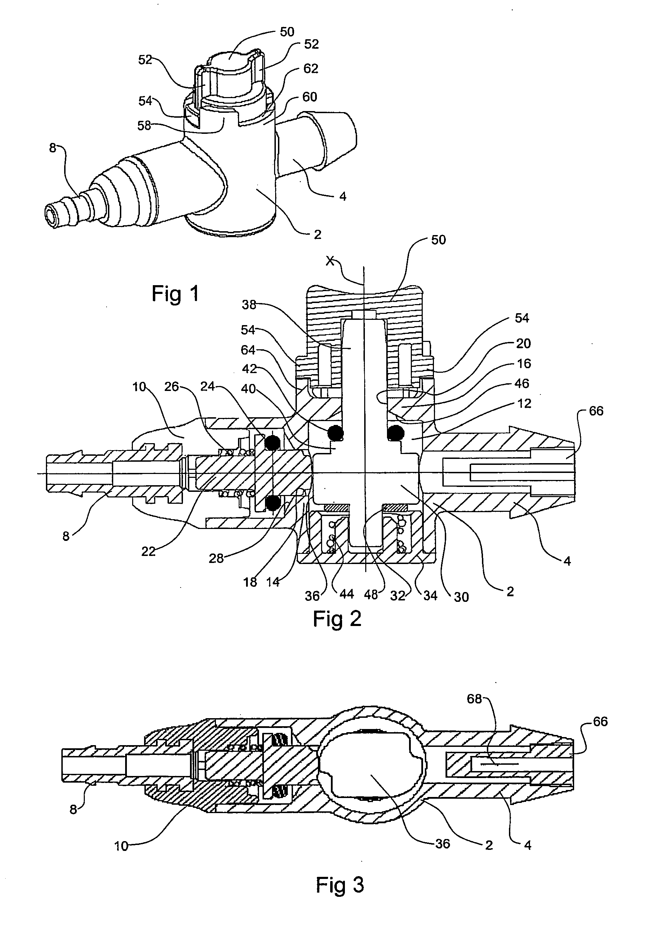

A first valve element 22 is guided for movement in the direction between the inlet and outlet spigots 4, 8 within the opening 18 and within the interior of the fitting 10. The first valve element 22 is provided with an O-ring 24. A spring 26 biases the first valve element 22 to the right as seen in Figure 2, to bring the O-ring 24 into contact with a conical valve seat 28 formed in the wall 14.

An operating element 30 is guided in the opening 20 in the wall 16, and in a recess 32 formed in a cap 34 which closes a face of the body 2 opposite the wall 16. The operating element 30 comprises a cam portion 36 disposed within the valve chamber 12 and a stem 38 which extends from the cam portion 36 through the opening 20 to the exterior of the body 2. At the transition between the cam portion 36 and the stem 38, there is a stepped region 40 provided with an O-ring 42, and constituting a second valve element. The operating element 30 is biased by a spring 44 in the upwards direction, as seen in Figure 2, to move the second valve element 40 to bring the O-ring 42 into sealing contact with a conical second valve seat 46. A washer 48 is provided between the spring 44 and the cam portion 36 of the operating element 30.

A control element in the form of a knob 50 is fitted on the stem 38. As seen in Figure 1, the control knob 50 has a generally cylindrical configuration with lateral wings 52 to assist in turning the knob 50. At the base of the knob, there are oppositely projecting lugs 54. The lower region of the knob 50 is situated within a surrounding wall having regions which project to different extents in a direction parallel to an axis X about which the knob 50 and the operating element 30 are rotatable. A first region 58 of the wall terminates at a relatively high level with respect to the knob 50. A second region 60 terminates at an intermediate level at an abutment surface 62. A third region 64 terminates at a lower level. It will be appreciated that each region 58, 60, 62 is one of a pair of similar regions disposed diametrically opposite each other with respect to the body 2.

A non-return valve 66 is fitted into the inlet spigot 4. This non-return valve comprises an elastomeric tubular element provided with a slit 68 in its wall. This construction permits air flow into the valve chamber 12 through the inlet spigot 4. Reverse flow is prevented, since a higher pressure in the valve chamber 12 than outside the valve will cause compression of the cylindrical wall of the non-return valve 66, so closing the slit 68.

In the condition shown in Figures 1 and 2, the control knob 50 is positioned about the axis X so that the lugs 54 are disposed above the wall portion 64. In this position, as shown with reference to Figure 3, the cam portion 36 engages the first valve element 22 to displace it against the bias of the spring 26 to take the O-ring 24 out of contact with the first valve seat 28. Also, because the lugs 54 are aligned with the lower wall portion 64, the knob 50 can be pressed downwardly, as seen in Figure 2, against the bias of the spring 44. This causes displacement of the O-ring 42 away from the second valve seat 46. The result is that there is communication between the outlet spigot 8, through the clearance between the opening 18 and the first valve element 22, the chamber 12 and the clearance between the opening 20 and the stem 38, to the exterior of the valve. The non-return valve 66 prevents flow from the chamber 12 through the inlet spigot 4.

If the knob 50 is released, the first valve element 40, including the O-ring 42, is pressed by the spring 44 into contact with the first valve seat 46. The knob 50 can then be rotated in a clockwise direction (as seen from above in Figure 1), which will cause the lugs 54 to travel over the abutment surface of the intermediate wall portion 60, this rotation being terminated by contact between the lugs 54 and the higher wall portions 58.

This rotation will cause the cam portion 36 to rotate to a position offset by approximately 90° from that shown in Figure 3, so that the first valve element 22 is displaced by the spring 26 to bring the O-ring 24 into contact with the first valve seat 28. Consequently, both the first valve element 22 and the second valve element 40 are in their closed conditions, preventing flow from the outlet spigot 8 to the exterior of the valve.

For use, the inlet spigot 4 will be connected to the outlet of a squeezable hand pump, and the outlet spigot 8 will be connected to a bladder forming part of an adjustable lumbar support for a chair. With the control knob 50 rotated to the position shown in Figure 3, but not depressed, so that the first valve element 22 is open but the second valve element 40 is closed, operation of the hand pump will cause air under pressure to be admitted through the inlet spigot 4 to the valve chamber 12, from where it can flow past the first valve element 22 and through the outlet spigot 8 to the bladder. If pumping on the hand pump ceases, return flow is prevented by the non-return valve 66. When the bladder has been inflated to the desired extent, the knob 50 is turned to bring the lugs 54 over the abutment surface 62, so that the first valve element 22 is closed and the knob 50 cannot be depressed against the spring 44 to open the second valve element 40. Consequently, reliable sealing is achieved between the bladder and the exterior of the valve. In particular, the non-return valve 66 is isolated from the pressure in the inflated bladder by the first valve element 22.

In order to deflate the bladder, the control knob 50 must be turned to the rotational position shown in Figure 1, so that the lugs 54 move off the abutment surface 62. This rotational movement causes the first valve element 22 to move to its open position under the action of the cam portion 36. Subsequently, the control knob 50 can be depressed against the action of the spring 44 to provide controlled release of air from the bladder through the clearance between the stem 38 and the opening 54. Once the required adjustment has been achieved, the control knob 50 is released and returned to the locked position with the lugs 54 again over the abutment surface 52.

It will be appreciated that, although the valve has been described in the context of a lumbar support for a chair, it can be used in other applications, and in particular other applications in which leak-resistant inflation control is required. Also, the valve can be used for controlling gases other than air, or liquids.

The valve may be used as part of a manifold, comprising two or more similar valves, possibly mounted in a common block providing the valve bodies. A single pump may be connected to the inlet spigots 4 of all of the valves. The valves can be operated independently of each other so that, for example, one bladder of a multiple bladder device can be inflated or deflated, leaving the other bladder or bladders unchanged.

## Claims

1. A valve comprising an inlet (4), an outlet (8) and an operating element (30) which is rotatable about an operating axis to operate a first valve element (22), and is displaceable along the operating axis to operate a second valve element (40), the first valve element (22), when open, permitting flow from the inlet (4) to the outlet (8) by passing the second valve element (40), displacement of the first (22) and second (40) valve elements to their open conditions permitting flow from the outlet (8) to the exterior of the valve past the first (22) and second (40) valve elements.

2. A valve as claimed in claim 1, in which the operating element (30) has a cam surface engaging the first valve element (22), whereby rotation of the operating element (30) displaces the first valve element (22) with respect to a first valve seat (28).

3. A valve as claimed in claim 2, in which the first valve element (22) is resiliently biased in the direction towards the cam surface.

4. A valve as claimed in claim 2 or 3, in which the first valve element (22) is resiliently biased towards the first valve seat (28).

5. A valve as claimed in any one of the preceding claims, in which the second valve element (40) is displaceable with respect to a second valve seat (46) by displacement of the operating element (30) along the operating axis.

6. A valve as claimed in claim 5, in which the second valve element (40) constituted by a portion of the operating element (30).

7. A valve as claimed in claim 5 or 6, in which the second valve element (40) is resiliently biased in the direction towards the second valve seat (46).

8. A valve as claimed in any one of the preceding claims, in which the operating element (30) is provided with a control element (50) which is manually rotatable and displaceable relatively to a body (2) of the valve.

9. A valve as claimed in claim 8, in which the control element (50) cooperates with the body (2) to permit displacement of the operating element (30) in a direction to move the second valve element (40) towards the open condition only when the control element (50) is in a rotational position corresponding to the open condition of the first valve element (22).

10. A valve as claimed in claim 9, in which the control element (50) and the body (2) have respective abutment surfaces extending transversely of the operating axis, which abutment surfaces are disposed opposite each other in a rotational position corresponding to the closed condition of the first valve element (22), so as to prevent displacement of the operating element (30) to move the second valve element (40) to the open condition, the abutment surfaces being out of alignment with each other when in the rotational position corresponding to the open condition of the first valve element (22), whereby displacement of the operating element (30) in the direction corresponding to opening of the second valve element (40) is permitted.

11. A valve as claimed in claim 10, in which the abutment surface (62) on the body (2) is provided on a wall surrounding the operating axis.

12. A valve as claimed in claim 10 or 11, in which the abutment surface on the control element (50) comprises a lug (54) projecting radially of the operating axis.

13. A valve as claimed in any one of the preceding claims, in which the inlet (4) is provided with a non-return valve (66).

14. A valve as claimed in any one of the preceding claims, which comprises an inflation check valve.

15. An inflatable article provided with a valve in accordance with any one of the preceding claims.

16. An inflatable article as claimed in claim 15, which is a lumbar support for a seat.

## Patentansprüche

1. Ventil, umfassend einen Einlass (4), einen Auslass (8) und ein Betätigungselement (30), das sich um eine Betätigungsachse drehen lässt, damit ein erstes Ventilelement (22) betätigt wird, und das sich entlang der Betätigungsachse verschieben lässt, damit ein zweites Ventilelement (40) betätigt wird, wobei das erste Ventilelement (22) im geöffneten Zustand eine Strömung vom Einlass (4) zum Auslass (8) ermöglicht, die das zweite Ventilelement (40) umgeht, und eine Verschiebung des ersten Ventilelements (22) und des zweiten Ventilelements (40) in ihre offenen Zustände eine Strömung vom Auslass (8) in die Umgebung des Ventils hinter dem ersten Ventilelement (22) und dem zweiten Ventilelement (40) erlaubt.

2. Ventil nach Anspruch 1, wobei das Betätigungselement (30) eine Nockenfläche aufweist, die in das erste Ventilelement (22) eingreift, und das Drehen des Betätigungselements (30) das erste Ventilelement (22) gegen einen ersten Ventilsitz (28) verschiebt.

3. Ventil nach Anspruch 2, in dem das erste Ventilelement (22) in der Richtung hin zur Nockenfläche elastisch vorgespannt ist.

4. Ventil nach Anspruch 2 oder 3, in dem das erste Ventilelement (22) hin zum ersten Ventilsitz (28) elastisch vorgespannt ist.

5. Ventil nach irgendeinem der vorhergehenden Ansprüche, in dem das zweite Ventilelement (40) bezüglich eines zweiten Ventilsitzes (46) verschiebbar ist, und zwar durch eine Verschiebung des Betätigungselements (30) entlang der Betätigungsachse.

6. Ventil nach Anspruch 5, wobei das zweite Ventilelement (40) aus einem Teil des Betätigungselements (30) besteht.

7. Ventil nach Anspruch 5 oder 6, wobei das zweite Ventilelement (40) in der Richtung hin zum zweiten Ventilsitz (46) elastisch vorgespannt ist.

8. Ventil nach irgendeinem der vorhergehenden Ansprüche, in dem das Betätigungselement (30) mit einem Steuerelement (50) versehen ist, das von Hand gedreht werden kann und sich gegen einen Körper (2) des Ventils verschieben lässt.

9. Ventil nach Anspruch 8, in dem das Steuerelement (50) mit dem Körper (2) zusammenwirkt, damit eine Verschiebung des Betätigungselements (30) in einer Richtung möglich wird, die das zweite Ventilelement (40) hin zum offenen Zustand bewegt, und zwar nur dann, wenn sich das Steuerelement (50) in einer Drehposition befindet, die dem offenen Zustand des ersten Ventilelements (22) entspricht.

10. Ventil nach Anspruch 9, wobei das Steuerelement (50) und der Körper (2) jeweils Stirnflächen aufweisen, die quer zur Betätigungsachse verlaufen, und die Stirnflächen einander gegenüberliegend angeordnet sind, und zwar in einer Drehposition, die dem geschlossenen Zustand des ersten Ventilelements (22) zugeordnet ist, damit verhindert wird, dass das Betätigungselement (30) das zweite Ventilelement (40) in den offenen Zustand bewegt, und die Stirnflächen nicht mehr miteinander ausgerichtet sind, wenn sie sich in der Drehposition befinden, die dem offenen Zustand des ersten Ventilelements (22) zugeordnet ist, wodurch eine Verschiebung des Betätigungselements (30) in die Richtung, die dem Öffnen des zweiten Ventilelements (40) zugeordnet ist, ermöglicht wird.

11. Ventil nach Anspruch 10, in dem die Stirnfläche (62) des Körpers (2) auf einer Wand vorhanden ist, die die Betätigungsachse umgibt.

12. Ventil nach Anspruch 10 oder 11, wobei die Stirnfläche auf dem Steuerelement (50) eine Nase (54) umfasst, die radial aus der Betätigungsachse herausragt.

13. Ventil nach irgendeinem der vorhergehenden Ansprüche, bei dem der Einlass (4) mit einem Rückschlagventil (66) versehen ist.

14. Ventil nach irgendeinem der vorhergehenden Ansprüche, das ein Aufblas-Rückschlagventil enthält.

15. Aufblasbarer Gegenstand, der mit einem Ventil gemäß irgendeinem der vorhergehenden Ansprüche ausgestattet ist.

16. Aufblasbarer Gegenstand nach Anspruch 15, wobei der Gegenstand eine Lendenstütze für einen Sitz ist.

## Revendications

1. Valve comprenant une entrée (4), une sortie (8) et un élément d'actionnement (30) susceptible d'être entraîné en rotation autour d'un axe d'actionnement pour actionner un premier élément de valve (22) et susceptible d'être déplacé le long de l'axe d'actionnement pour actionner un second élément de valve (40), le premier élément de valve (22), lorsqu'il est ouvert, permettant un écoulement depuis l'entrée (4) jusqu'à la sortie (8) contournant le second élément de valve (40), un déplacement des premier (22) et second (40) éléments de valve vers leurs conditions d'ouverture permettant un écoulement depuis la sortie (8) jusqu'à l'extérieur de la valve au-delà des premier (22) et second (40) éléments de valve.

2. Valve selon la revendication 1, dans laquelle l'élément d'actionnement (30) comporte une surface de came venant au contact du premier élément de valve (22), grâce à quoi une rotation de l'élément d'actionnement (30) déplace le premier élément de valve (22) par rapport à un premier siège de valve (28).

3. Valve selon la revendication 2, dans laquelle le premier élément de valve (22) est élastiquement sollicité dans la direction de la surface de came.

4. Valve selon la revendication 2 ou 3, dans laquelle le premier élément de valve (22) est élastiquement sollicité dans la direction du premier siège de valve (28).

5. Valve selon l'une quelconque des revendications précédentes, dans laquelle le second élément de valve (40) est susceptible d'être déplacé par rapport à un second siège de valve (46) par un déplacement de l'élément d'actionnement (30) le long de l'axe d'actionnement.

6. Valve selon la revendication 5, dans laquelle le second élément de valve (40) est constitué par une partie de l'élément d'actionnement (30).

7. Valve selon la revendication 5 ou 6, dans laquelle le second élément de valve (40) est élastiquement sollicité dans la direction du second siège de valve (46).

8. Valve selon l'une quelconque des revendications précédentes, dans laquelle l'élément d'actionnement (30) est pourvu d'un élément de commande (50) susceptible d'être manuellement entraîné en rotation et susceptible d'être déplacé relativement à un corps (2) de la valve.

9. Valve selon la revendication 8, dans laquelle l'élément de commande (50) coopère avec le corps (2) pour permettre un déplacement de l'élément d'actionnement (30) dans une direction déplaçant le second élément de valve (40) vers la condition d'ouverture uniquement lorsque l'élément de commande (50) est dans une position de rotation correspondant à la condition d'ouverture du premier élément de valve (22).

10. Valve selon la revendication 9, dans laquelle l'élément de commande (50) et le corps (2) comportent des surfaces de butée respectives s'étendant transversalement à l'axe d'actionnement, lesquelles surfaces de butée sont disposées l'une en face de l'autre dans une position de rotation correspondant à la condition de fermeture du premier élément de valve (22), de façon à empêcher qu'un déplacement de l'élément d'actionnement (30) ne déplace le second élément de valve (40) vers la condition d'ouverture, les surfaces de butée étant désalignées l'une avec l'autre lorsqu'elles se trouvent dans la position de rotation correspondant à la condition d'ouverture du premier élément de valve (22), grâce à quoi un déplacement de l'élément d'actionnement (30) dans la direction correspondant à l'ouverture du second élément de valve (40) est permis.

11. Valve selon la revendication 10, dans laquelle la surface de butée (62) sur le corps (2) est formée sur une paroi entourant l'axe d'actionnement.

12. Valve selon la revendication 10 ou 11, dans laquelle la surface de butée sur l'élément de commande (50) comprend une patte (54) se projetant radialement relativement à l'axe d'actionnement.

13. Valve selon l'une quelconque des revendications précédentes, dans laquelle l'entrée (4) est pourvue d'un clapet anti-retour (66).

14. Valve selon l'une quelconque des revendications précédentes, qui constitue une soupape de retenue de gonflage.

15. Article gonflable pourvu d'une valve selon l'une quelconque des revendications précédentes.

16. Article gonflable selon la revendication 15, qui est un support lombaire pour un siège.
